# EUROPEAN PATENT APPLICATION

(11) **EP 2 453 182 A1**
(43) Date of publication of application: **16.05.2012**
(21) Application number: 11188545.5
(22) Date of filing: 10.11.2011
(51) Int. Cl.: F24F 5/00, B60H 1/00, F25B 21/04, B60H 3/02, F24F 3/052

(54) **Peltier-type Air-conditioning heat exchanger and air conditioner having the same**

(30) Priority: 12.11.2010 JP 2010253926; 22.03.2011 JP 2011062977
(71) Applicant: Kabushiki Kaisha Toyota Jidoshokki, Kariya-shi, Aichi 448-8671 (JP)
(72) Inventor: Akiyama, Hirokuni, Kariya-shi, Aichi 448-8671 (JP); Kato, Hirohisa, Kariya-shi, Aichi 448-8671 (JP); Morisaku, Naoto, Kariya-shi, Aichi 448-8671 (JP); Yokomachi, Naoya, Kariya-shi, Aichi 448-8671 (JP); Murase, Masakazu, Kariya-shi, Aichi 448-8671 (JP); Ban, Takahisa, Kariya-shi, Aichi 448-8671 (JP)
(74) Representative: TBK

(57) **Abstract**

The air-conditioning heat exchanger includes a plurality of Peltier devices, a plurality of first heat transfer members, a plurality of second heat transfer members, an air-conditioning passage and a heat exchange medium passage. The air-conditioning passage has therein the Peltier devices and the first heat transfer members. The air-conditioning passage allows air to be air-conditioned to flow therethrough. The air-conditioning passage has a plurality of divided passages at least at positions that are downstream of upstream ends of the first heat transfer members with respect to an air flowing direction in which the air flows through the air-conditioning passage. The Peltier device in each divided passage is controlled separately from the Peltier device in other divided passage. The heat exchange medium passage has therein the second heat transfer members and allows fluid to flow through the heat exchange medium passage.

## Description

### BACKGROUND OF THE INVENTION

The present invention relates to an air-conditioning heat exchanger and an air conditioner having the air-conditioning heat exchanger. The air-conditioning heat exchanger is used as a cooler core or heater core for air conditioning.

Japanese Unexamined Patent Application Publication No. 10-300126 discloses a conventional air-conditioning heat exchanger which includes a dehumidification Peltier device, a heating Peltier device, a dehumidification heat-transfer member and a heating heat-transfer member. One surface of the dehumidification Peltier device serves as the heat absorbing surface and the other surface serves as the heat radiating surface. One surface of the heating Peltier device serves as the heat radiating surface and the other surface serves as the heat absorbing surface. The dehumidification heat-transfer member is fixed to the one surface of the dehumidification Peltier device and the heating heat-transfer member is fixed to the one surface of the heating Peltier device.

The air-conditioning heat exchanger has an air-conditioning passage and two heat exchange members. The air-conditioning passage has therein the dehumidification heat-transfer member and the heating heat-transfer member and allows air to be air-conditioned to flow through the air-conditioning passage. The first heat exchange member is in contact with the other surface of the dehumidification Peltier device that serves as the heat radiating surface and draws heat from the dehumidification Peltier device. The second heat exchange member is in contact with the other surface of the heating Peltier device that serves as the heat absorbing surface and provides heat to the heating Peltier device.

The dehumidification Peltier device and the dehumidification heat-transfer member are located upstream of the heating Peltier device and the heating heat-transfer member with respect to the direction in which air flows through the air-conditioning passage.

In the air-conditioning heat exchanger wherein air to be air-conditioned flows through the air-conditioning passage, the air is cooled by being in contact with the dehumidification heat-transfer member and then heated by being in contact with the heating heat-transfer member. Thus, the air-conditioning heat exchanger provides heating and dehumidification of the air to be air-conditioned.

There has been a need that the air-conditioning heat exchanger should perform heating and dehumidification more efficiently. However, the above-described conventional air-conditioning heat exchanger is so configured that the entire air to be air-conditioned is cooled by being in contact with the dehumidification heat-transfer member and then heated by being in contact with the heating heat-transfer member. In order that the air-conditioning heat exchanger performs heating and dehumidification efficiently, the air-conditioning passage needs to be lengthened so that it takes a time that is long enough for the entire air to be cooled and heated as desired. The lengthened air-conditioning passage increases the size of the air conditioner having the air-conditioning heat exchanger.

The present invention is directed to an air-conditioning heat exchanger which provides efficient heating and dehumidification and prevents the air conditioner from growing in size. In addition, the present invention is directed to the air conditioner which provides heating and defogging efficiently for its size.

### SUMMARY OF THE INVENTION

In accordance with a first aspect of the present invention, the air-conditioning heat exchanger includes a plurality of Peltier devices, a plurality of first heat transfer members, a plurality of second heat transfer members, an air-conditioning passage and a heat exchange medium passage. Each Peltier device has a first surface and a second surface one of which serves as a heat absorbing surface and the other of which serves as a heat radiating surface. The first heat transfer members are thermally connected to the first surfaces of the Peltier devices, respectively. The second heat transfer members are thermally connected to the second surfaces of the Peltier devices, respectively. The air-conditioning passage has therein the Peltier devices and the first heat transfer members. The air-conditioning passage allows air to be air-conditioned to flow therethrough. The air-conditioning passage has a plurality of divided passages at least at positions that are downstream of upstream ends of the first heat transfer members with respect to an air flowing direction in which the air flows through the air-conditioning passage. The Peltier device in each divided passage is controlled separately from the Peltier device in other divided passage. The heat exchange medium passage has therein the second heat transfer members and allows fluid to flow through the heat exchange medium passage.

In accordance with a second aspect of the present invention, the air conditioner includes an air-conditioning heat exchanger and a duct having therein the air-conditioning heat exchanger. The air-conditioning heat exchanger includes a plurality of Peltier devices, a plurality of first heat transfer members, a plurality of second heat transfer members, an air-conditioning passage and a heat exchange medium passage. Each Peltier device has a first surface and a second surface one of which serves as a heat absorbing surface and the other of which serves as a heat radiating surface. The first heat transfer members are thermally connected to the first surfaces of the Peltier devices, respectively. The second heat transfer members are thermally connected to the second surfaces of the Peltier devices, respectively. The air-conditioning passage has therein the Peltier devices and the first heat transfer members. The air-conditioning passage allows air to be air-conditioned to flow therethrough. The air-conditioning passage has a heating passage and a dehumidification passage at least at positions that are downstream of upstream ends of the first heat transfer members with respect to an air flowing direction in which the air flows through the air-conditioning passage. The Peltier device in the heating passage is controlled separately from the Peltier device in the dehumidification passage. The Peltier device in the heating passage and the Peltier device in the dehumidification passage are controlled so as to differ in directions of electric currents supplied to the Peltier device. The heat exchange medium passage has therein the second heat transfer members and allows fluid to flow through the heat exchange medium passage. The duct has a heating guide passage and a dehumidification guide passage. The heating guide passage guides the air heated by the first heat transfer member in the heating passage toward a heating outlet. The dehumidification guide passage guides the air cooled by the first heat transfer member in the dehumidification passage toward a dehumidification outlet.

It is noted that the sentence "a plurality of first heat transfer members are thermally connected to the first surfaces of the Peltier devices" means not only that the plurality of the first heat transfer members are directly connected to the first surfaces of the Peltier devices, but also that the plurality of the first heat transfer members are connected to the first surfaces of the Peltier devices with a metallic plate interposed between the first heat transfer members and the first surfaces of the Peltier devices. That is, the sentence means that a plurality of first heat transfer members are connected to the first surfaces of the Peltier devices while the first heat transfer members and the first surfaces of the Peltier devices allow heat transfer therebetween. The same is true of the sentence "a plurality of second heat transfer members are thermally connected to the second surfaces of the Peltier devices."

Other aspects and advantages of the invention will become apparent from the following description, taken in conjunction with the accompanying drawings, illustrating by way of example the principles of the invention.

### BRIEF DESCRIPTION OF THE DRAWINGS

The invention together with objects and advantages thereof, may best be understood by reference to the following description of the presently preferred embodiments together with the accompanying drawings in which:
Fig. 1 is a schematic cross sectional view showing a vehicle air conditioner having an air-conditioning heat exchanger according to a first embodiment of the present invention;
Fig. 2 is a schematic cross sectional view showing the air-conditioning heat exchanger as taken along the line 11-11 of Fig. 1;
Fig. 3 is an enlarged fragmentary cross sectional view showing the air-conditioning heat exchanger of Fig. 1;
Figs. 4A and 4B are illustrative views showing a layout of Peltier device of a heating passage and Peltier device of a dehumidification passage of the air-conditioning heat exchanger of Fig. 1 relative to a heat exchange medium passage of the air-conditioning heat exchanger and also showing the relation between the flow direction of cooling water and temperature change of cooling water;
Fig. 5 is a schematic cross sectional view showing a vehicle air conditioner according to a second embodiment of the present invention; and
Fig. 6 is a schematic fragmentary cross sectional view showing the vehicle air conditioner of Fig. 5.

### DETAILED DESCRIPTION OF THE EMBODIMENTS

The following will describe the air-conditioning heat exchangers and the air conditioners according to the first and second embodiments of the present invention with reference to the accompanying drawings.

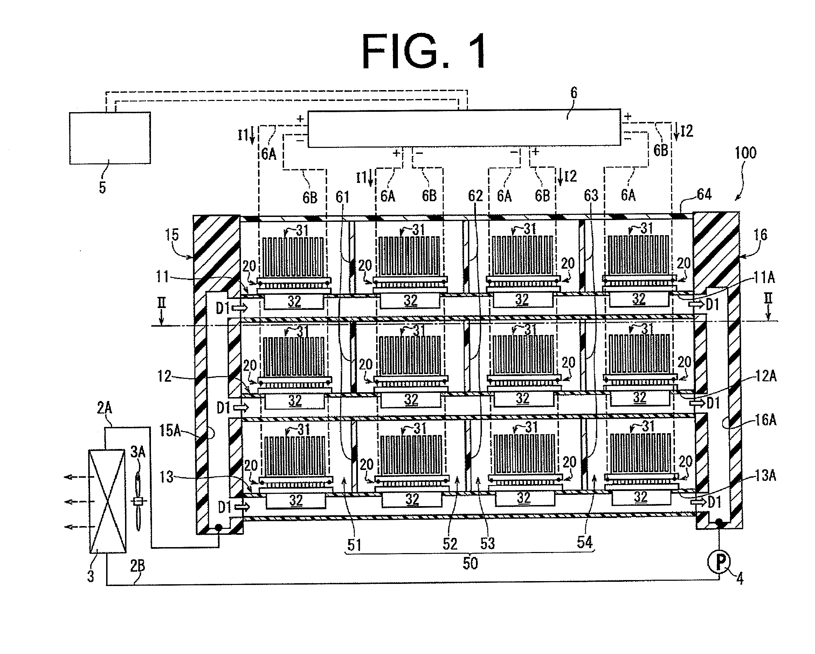

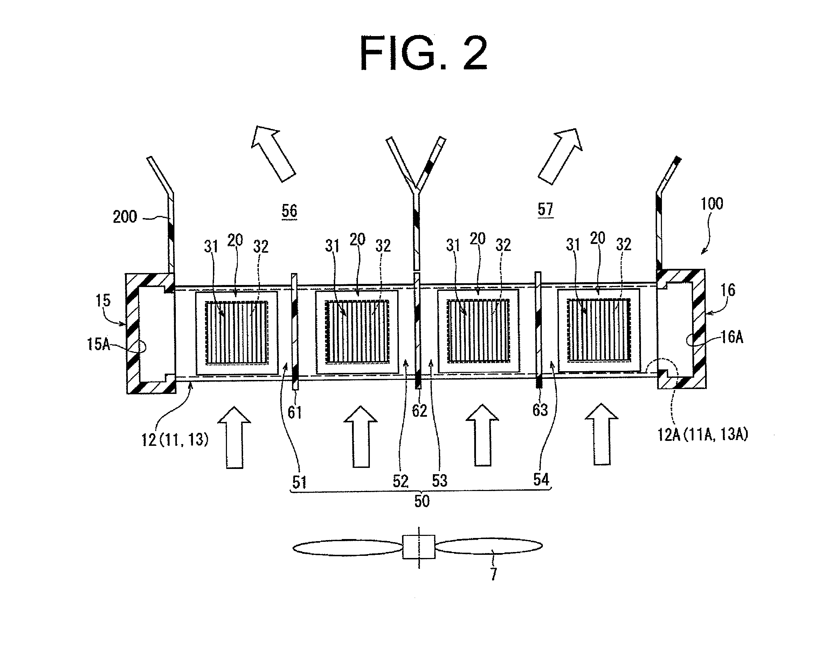

Referring to Figs. 1 and 2, an air-conditioning heat exchanger 100, a power source 5, a pump 4, a radiator 3, an air-conditioning fan 7 and a drive circuit 6 cooperate to form a vehicle air conditioner. Although not shown in Fig. 1, the air-conditioning fan 7 is located on the near side of the air-conditioning heat exchanger 100 as seen in Fig. 1, as will be appreciated from Fig. 2. The air conditioner is mounted on a vehicle for modifying the condition of the air in the cabin of the vehicle or vehicle interior. Description and illustration of known structure of the vehicle air conditioner will be omitted or simplified appropriately.

The power source 5 is provided by a battery or electric generator which is mounted on the vehicle. As shown in Fig. 1, the pump 4 is connected in the pipe 2B which interconnects the air-conditioning heat exchanger 100 and the radiator 3 for causing cooling water or the heat-exchanger fluid in the pipe 2B to circulate. Liquid such as water or gas such as air may be used as the fluid. A long-life coolant (LLC) should preferably be used as the cooling water. The cooling water flowing through the radiator 3 is cooled by heat exchange with outside air blown by a radiating fan 3A of the radiator 3. As shown in Fig. 2, the air-conditioning fan 7 is operable to blow air to be air-conditioned toward the air-conditioning heat exchanger 100.

As shown in Figs. 1 and 2, the air-conditioning heat exchanger 100 includes a first heat exchanger tube 11, a second heat exchanger tube 12, a third heat exchanger tube 13, a first head 15, a second head 16 and an air-conditioning passage 50.

Each of the heat exchanger tubes 11, 12 and 13 is provided by an elongated tube extending in horizontal direction (or in lateral direction as seen in Figs. 1 and 2). The heat exchanger tubes 11, 12 and 13 are spaced in vertical direction (or in vertical direction as seen Fig. 1, or in a direction perpendicular to the plane of Fig. 2) and located parallel to each other. The heat exchanger tubes 11, 12 and 13 have therein heat exchange medium passages 11A, 12A and 13A, respectively, which allow cooling water to flow therethrough. Each of the heat exchange medium passages 11A, 12A and 13A has opened opposite ends in the longitudinal direction of the heat exchanger tubes 11, 12 and 13.

The first head 15 is of a substantially rectangular shape extending in vertical direction and one end of each of the heat exchanger tubes 11, 12 and 13 is connected to the first head 15. The first head 15 has therein a first cooling water passage 15A which communicates with each of the heat exchange medium passages 11A, 12A and 13A at one end thereof for allowing cooling water to flow therethrough. The first head 15 is closed at the upper end thereof and connected at the lower end thereof to the radiator 3 via the pipe 2A.

The second head 16 is also of a substantially rectangular shape extending in vertical direction and connected to the other end of each of the heat exchanger tubes 11, 12 and 13. The second head 16 has therein a second cooling water passage 16A which communicates with each of the heat exchange medium passages 11A, 12A and 13A at the other end thereof for allowing cooling water to flow therethrough. The second head 16 is closed at the upper end thereof and connected at the lower end thereof to the radiator 3 via the pipe 2B.

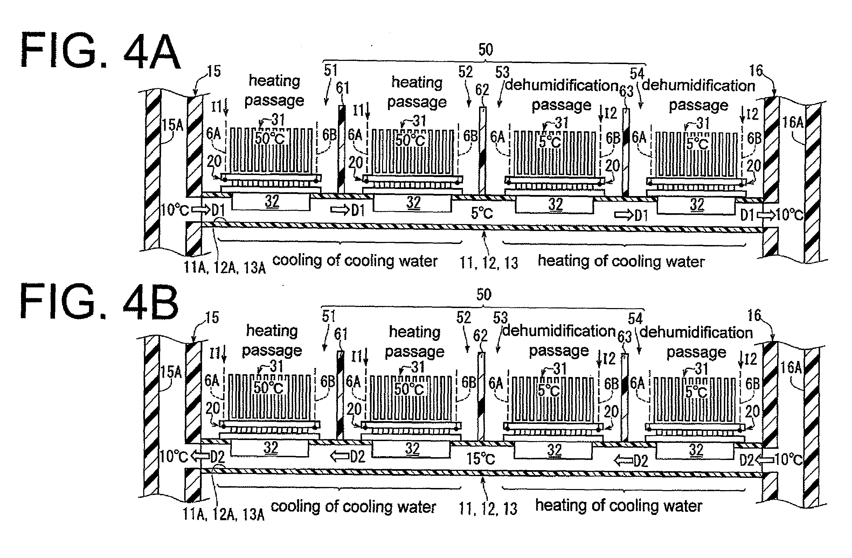

As shown in Fig. 1, when the pump 4 is activated in normal direction, cooling water pumped by the pump 4 flows through the radiator 3, the pipe 2A and the first cooling water passage 15A and then through the heat exchange medium passages 11 A, 12A and 13A from the one end to the other end thereof. The water flowing direction in which cooling water flows through the heat exchange medium passages 11A, 12A and 13A is indicated by D1, as shown in Figs. 1 and 4A. After flowing through the second cooling water passage 16A to the pipe 2B, the cooling water is returned to the radiator 3 by the pump 4.

It is noted that the cooling water may flow through the heat exchange medium passages 11A, 12A and 13A from the other end toward the one end by operating the pump 4 in its reverse direction. The water flowing direction in which the cooling water flows through the heat exchange medium passages 11A, 12A and 13A in such a case is indicated by D2, as shown in Fig. 4B.

As shown in Fig. 1, an upper wall 64 is provided between the upper ends of the first head 15 and the second head 16. The upper wall 64 is formed by a flat plate extending in horizontal direction. The upper wall 64 is spaced upwardly from the first heat exchanger tube 11 in parallel relation thereto.

As shown in Figs. 1 and 2, partition walls 61, 62 and 63 are provided between the first head 15 and the second head 16. Each of the partition walls 61, 62 and 63 is formed by a flat plate extending in vertical direction. The partition walls 61, 62 and 63 are spaced in the longitudinal direction of the heat exchanger tubes 11, 12 and 13 in parallel relation to each other.

As shown in Fig. 1, the air-conditioning heat exchanger 100 has therein three spaces surrounded by the heat exchanger tubes 11, 12 and 13, the upper wall 64, the partition wall 61 and the first head 15. These three spaces are located one above the other, which will be referred to as first air-conditioning passage 51. The air-conditioning heat exchanger 100 also has therein three spaces surrounded by the heat exchanger tubes 11, 12 and 13, the upper wall 64, the partition wall 61 and the partition wall 62. These three spaces are located one above the other, which will be referred to as second air-conditioning passage 52. The air-conditioning heat exchanger 100 further has therein three spaces surrounded by the heat exchanger tubes 11, 12 and 13, the upper wall 64, the partition wall 62 and the partition wall 63. These three spaces are located one above the other, which will be referred to as third air-conditioning passage 53. The air-conditioning heat exchanger 100 further has therein three spaces surrounded by the heat exchanger tubes 11, 12 and 13, the upper wall 64, the partition wall 63 and the second head 16. These three spaces are located one above the other, which will be referred to as fourth air-conditioning passage 54.

The air to be air-conditioned and blown toward the air-conditioning heat exchanger 100 by the air-conditioning fan 7 is distributed to the four air-conditioning passages 51-54, as shown in Fig. 2. After flowing through the four air-conditioning passages 51-54, the air is flowed out of the four air-conditioning passages 51-54 toward the opposite side of the air-conditioning heat exchanger 100 from the air-conditioning fan 7. In this case, the partition walls 61, 62 and 63 function to divide the streams of air flowing through the four air-conditioning passages 51-54 so that no mixing air streams occur. It is noted that the air streams in the four air-conditioning passages 51-54 flow from the near side to the far side of the plane of Fig. 1. The four divided passages or air-conditioning passages 51-54 serve as the air-conditioning passage 50 of the present invention. Of the air-conditioning passage 50, the first and second air-conditioning passages 51 and 52 serve as the heating passage of the present invention, and the third and fourth air-conditioning passages 53 and 54 serve as the dehumidification passage of the present invention.

As shown in Fig. 2, the vehicle air conditioner has a duct 200 which forms a heating guide passage 56 and a dehumidification guide passage 57. The heating guide passage 56 and the dehumidification guide passage 57 are disposed on the opposite side of the air-conditioning heat exchanger 100 from the air-conditioning fan 7.

The heating guide passage 56 guides air flowing out of the first and second air-conditioning passages 51 and 52 toward a heating outlet (not shown) that is opened to the vehicle interior. The air flowing out of the heating outlet is blown toward the passenger in the vehicle interior.

The dehumidification guide passage 57 guides air flowing out of the third and fourth air-conditioning passages 53 and 54 toward a dehumidification outlet (not shown) that is opened to the vehicle interior. The air flowing out of the dehumidification outlet is blown toward the windshield of the vehicle.

The air-conditioning heat exchanger 100 has twelve Peltier devices 20, as shown in Fig. 1. More specifically, four Peltier devices 20 are disposed on the top of each of the first through third heat exchanger tubes 11, 12 and 13. That is, three Peltier devices 20 are disposed vertically in each of the first through fourth air-conditioning passages 51-54.

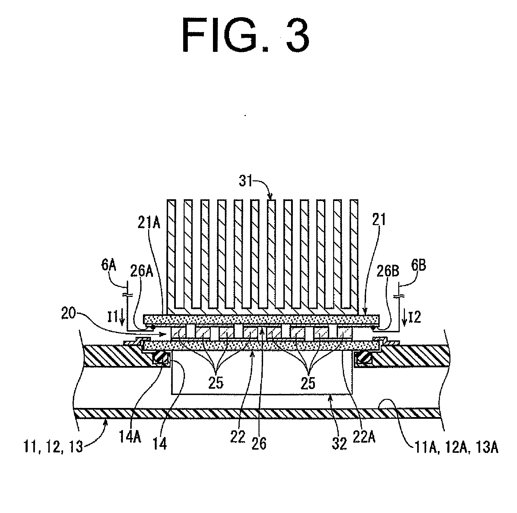

Since the Peltier device 20 per se is known in the art, only the simplified description of the Peltier device 20 will be provided below. As shown in Fig. 3, each Peltier device 20 has a first insulated substrate 21 formed by a flat plate, a second insulated substrate 22 formed by a flat plate, a plurality of thermoelectric conversion chips 25 and a wiring pattern 26. The second insulated substrate 22 is downwardly spaced from the first insulated substrate 21 in parallel relation thereto. The thermoelectric conversion chips 25 are held between the first insulated substrate 21 and the second insulated substrate 22. The wiring pattern 26 is formed on the opposing surfaces of the first insulated substrate 21 and the second insulated substrate 22 so as to electrically connect the thermoelectric conversion chips 25 to the first insulated substrate 21 and the second insulated substrate 22.

As shown in Fig. 1, the aforementioned drive circuit 6 has four pairs of electric supply lines 6A and 6B through which power supplied from the power source 5 is distributed to the respective Peltier devices 20. As shown in Fig. 3, the wiring pattern 26 has one end 26A and the other end 26B that are electrically connected to their corresponding electric supply lines 6A and 6B.

In the first embodiment, the Peltier devices 20 are divided into two groups that are controlled separately from one group to the other. One group of the Peltier devices 20 is disposed in the heating passage and the other is disposed in the dehumidification passage. That is, when the drive circuit 6 applies electric current I1 to the wiring pattern 26 in such a way that the current I1 flows from the one end 26A to the other end 26B of the wiring pattern 26 via the electric supply lines 6A and 6B, the top surface 21A of the first insulated substrate 21 serves as the heat radiating surface and the bottom surface 22A of the second insulated substrate 22 serves as the heat absorbing surface. When the drive circuit 6 applies electric current I2 to the wiring pattern 26 in such a way that the current I2 flows from the other end 26B to the one end 26A via the electric supply lines 6A and 6B, the top surface 21A of the first insulated substrate 21 serves as the heat absorbing surface and the bottom surface 22A of the second insulated substrate 22 serves as the heat radiating surface. The top surface 21A of the first insulated substrate 21 serves as the first surface of the Peltier device of the present invention and the bottom surface 22A of the second insulated substrate 22 serves as the second surface of the Peltier device of the present invention.

The air-conditioning heat exchanger 100 further has a plurality of first heat transfer members 31 that are fixed on the top surfaces 21A of the respective first insulated substrates 21 of the Peltier devices 20 and a plurality of second heat transfer members 32 that are fixed on the bottom surfaces 22A of the respective second insulated substrates 22 of the Peltier devices 20. The air-conditioning passage 50 has the four divided passages or four air-conditioning passages 51-54 at positions that are downstream of the upstream ends of the first heat transfer members 31 with respect to an air flowing direction in which air flows through the air-conditioning passages 51-54.

As shown in Fig. 1, three first heat transfer members 31 are disposed in each of the first through fourth air-conditioning passages 51-54. Four second heat transfer members 32 are mounted to each of the first through third heat exchanger tubes 11-13 and located in their corresponding heat exchange medium passages 11A-13A. More specifically, each of the first through third heat exchanger tubes 11-13 has radially therethrough four openings 14 in which the Peltier devices 20 are mounted, as shown in Fig. 3. The second insulated substrate 22 of each Peltier device 20 is fixed at the bottom surface 22A thereof to its corresponding heat exchanger tubes 11-13 via an O ring 14A in close contact with the periphery of the opening 14, so that the opening 14 is sealed and the second heat transfer member 32 fixed to the bottom surface 22A is disposed projecting into its corresponding heat exchange medium passages 11A-13A via the opening 14.

The first heat transfer member 31 is provided by a known heat exchanger member formed by cutting an aluminum extrusion with a comb-teeth shape in cross section and has a plurality of radiator plates. Each radiator plate of the first heat transfer member 31 extends along the flow direction of air blown by the air-conditioning fan 7 as shown in Fig. 2 for a distance that is long enough for the air to be in contact with the radiator plate for a long period of time with reduced resistance against the air flow.

The second heat transfer member 32 is provided by a known heat exchanger member as in the case of the first heat transfer member 31. The second heat transfer member 32 also has a plurality of radiator plates. Although not shown in the drawings, each radiator plate of the second heat transfer member 32 extends along the longitudinal direction of the first through third heat exchanger tubes 11-13 for a distance that is long enough for the cooling water flowing through the heat exchange medium passages 11A-13A to be in contact with the radiator plate for a long period of time with reduced resistance against the flow of the cooling water.

The first and second heat transfer members 31 and 32 are not limited to the above structure, but may be provided by a corrugated heat transfer member formed by bending thin plates in a wavy manner. The first and second heat transfer members 31 and 32 may be formed of fins or a heat exchange passage through which fluid flows.

As shown in Fig. 1, the first pair of electric supply lines 6A and 6B extending from the drive circuit 6 is electrically connected to the wiring pattern 26 of each Peltier device 20 in the first air-conditioning passage 51. The second pair of electric supply lines 6A and 6B extending from the drive circuit 6 is electrically connected to the wiring pattern 26 of each Peltier device 20 in the second air-conditioning passage 52. The third pair of electric supply lines 6A and 6B extending from the drive circuit 6 is electrically connected to the wiring pattern 26 of each Peltier device 20 in the third air-conditioning passage 53. The fourth pair of electric supply lines 6A and 6B extending from the drive circuit 6 is electrically connected to the wiring pattern 26 of each Peltier device 20 in the fourth air-conditioning passage 54.

The drive circuit 6 is configured to apply the aforementioned electric current I1 to the three Peltier devices 20 in the first air-conditioning passage 51 and the three Peltier devices 20 in the second air-conditioning passage 52. In each Peltier device 20 in the first and second air-conditioning passages 51 and 52, therefore, the top surface 21 A of the first insulated substrate 21 serves as the heat radiating surface and the bottom surface 22A of the second insulated substrate 22 serves as the heat absorbing surface. Thus, the first heat transfer member 31 fixed to the top surface 21A allows the air flowing through the first and second air-conditioning passages 51 and 52 to be heated.

The drive circuit 6 is configured also to apply the aforementioned electric current 12 to the three Peltier devices 20 in the third air-conditioning passage 53 and the three Peltier devices 20 in the fourth air-conditioning passage 54. In each Peltier device 20 in the third and fourth air-conditioning passages 53 and 54, therefore, the top surface 21A of the first insulated substrate 21 serves as the heat absorbing surface and the bottom surface 22A of the second insulated substrate 22 serves as the heat radiating surface. Thus, the first heat transfer member 31 fixed to the top surface 21A allows the air flowing through the third and fourth air-conditioning passages 53 and 54 to be cooled. In this case, dehumidification is accomplished by cooling the air to dew-point temperature.

Thus, the Peltier devices 20 in the first and second air-conditioning passages 51 and 52 serve to heat the vehicle interior and the Peltier devices 20 in the third and fourth air-conditioning passages 53 and 54 serve to dehumidify the vehicle interior. That is, the Peltier devices 20 are divided into two groups, one belonging to the first and second air-conditioning passages 51 and 52 (the heating passage) and the other of which belongs to the third and fourth air-conditioning passages 53 and 54 (the dehumidification passage).

When air is blown toward the air-conditioning heat exchanger 100 by the air-conditioning fan 7, the blown air is distributed to the four air-conditioning passages 51-54. The air flowing through the four air-conditioning passages 51-54 is heated or cooled by being in contact with the first heat transfer members 31 in the four air-conditioning passages 51-54.

More specifically, the air flowing through the first and second air-conditioning passages 51 and 52 is heated by the first heat transfer members 31 of the Peltier devices 20 in the first and second air-conditioning passages 51 and 52. The air heated in the first and second air-conditioning passages 51 and 52 and guided to the heating outlet (not shown) by the heating guide passage 56 causes the vehicle interior to be heated efficiently without being mixed with the cooled air.

On the other hand, the air flowing through the third and fourth air-conditioning passages 53 and 54 is cooled by the first heat transfer members 31 of the Peltier devices 20 in the third and fourth air-conditioning passages 53 and 54. The air cooled in the third and fourth air-conditioning passages 53 and 54 and guided to the dehumidification outlet (not shown) by the dehumidification guide passage 57 causes the windshield of the vehicle to be defogged efficiently without being mixed with the heated air. Thus, the air-conditioning heat exchanger 100 provides heating and dehumidification efficiently.

In this case, the provision of the partition walls 61-63 prevents the air heated in the first and second air-conditioning passages 51 and 52 and the air cooled in the third and fourth air-conditioning passages 53 and 54 from being mixed with each other. Therefore, the air-conditioning heat exchanger 100 can shorten the air-conditioning passage such as 50 as compared to the conventional air-conditioning heat exchanger where the entire air to be air-conditioned is cooled and then heated. Consequently, the air-conditioning heat exchanger 100 prevents the vehicle air conditioner from growing in size.

Therefore, the air-conditioning heat exchanger 100 prevents the vehicle air conditioner from growing in size while providing heating and dehumidification efficiently. In addition, the vehicle air conditioner provides heating and defogging efficiently for its size.

In the air-conditioning heat exchanger 100, when the first heat transfer members 31 of the Peltier devices 20 in the first and second air-conditioning passages 51 and 52 are heated, for example, to 50 degrees Celsius for heating, the paired second heat transfer members 32 need to absorb heat from the cooling water in accordance with the heating of the first heat transfer members 31. When the first heat transfer members 31 of the Peltier devices 20 in the third and fourth air-conditioning passages 53 and 54 are cooled, for example, to 5 degrees Celsius for dehumidification, the paired second heat transfer members 32 need to provide heat to the cooling water in accordance with the cooling of the first heat transfer members 31.

When the pump 4 is operating in normal direction so that the cooling water flowing through the heat exchange medium passages 11A-13A flows in the direction D1 shown in Fig. 4A, the Peltier devices 20 in the first and second air-conditioning passages 51 and 52 are located upstream of the Peltier devices 20 in the third and fourth air-conditioning passages 53 and 54 with respect to the water flowing direction D1. When the cooling water in the first cooling water passage 15A with a temperature of, for example, 10 degrees Celsius flows through the heat exchange medium passages 11A-13A, the second heat transfer members 32 of the Peltier devices 20 in the first and second air-conditioning passages 51 and 52 draws heat from the cooling water and the temperature of the cooling water drops, for example, to 5 degrees Celsius. This cooling water draws heat positively from the second heat transfer members 32 of the Peltier devices 20 in the third and fourth air-conditioning passages 53 and 54. Thus, the temperature of the cooling water rises, for example, to 10 degrees Celsius again. Consequently, the air-conditioning heat exchanger 100 enhances the capacity of dehumidification of the Peltier devices 20 in the third and fourth air-conditioning passages 53 and 54.

More specifically, the bottom surface 22A of each Peltier device 20 in the third and fourth air-conditioning passages 53 and 54 radiates the heat to which power supplied from the drive circuit 6 to the Peltier device 20 is converted and the heat which is used for cooling the air at the top surface 21A. Thus, while the bottom surface 22A is liable to transfer a large amount of heat, the top surface 21A transfers a small amount of heat. Therefore, cooling the cooling water by contact with the second heat transfer members 32 of the Peltier device 20 in the first and second air-conditioning passages 51 and 52 and then allowing the water to be in contact with the second heat transfer members 32 of the Peltier devices 20 in the third and fourth air-conditioning passages 53 and 54, the amount of heat transferred from the top surface 21A is increased.

When the pump 4 is operating in reverse direction so that the cooling water flowing through the heat exchange medium passages 11A-13A flows in the direction D2 shown in Fig. 4B, the Peltier devices 20 in the first and second air-conditioning passages 51 and 52 are located downstream of the Peltier devices 20 in the third and fourth air-conditioning passages 53 and 54 with respect to the water flowing direction D2. When the cooling water in the second cooling water passage 16A with a temperature of, for example, 10 degrees Celsius flows through the heat exchange medium passages 11A-13A, the cooling water draws heat from the second heat transfer members 32 of the Peltier devices 20 in the third and fourth air-conditioning passages 53 and 54, thereby raising the water temperature, for example, to 15 degrees Celsius. This cooling water provides heat positively to the second heat transfer members 32 of the Peltier devices 20 in the first and second air-conditioning passages 51 and 52, thereby lowering the water temperature, for example, to 10 degrees Celsius again. Consequently, the air-conditioning heat exchanger 100 raises the temperature range of the cooling water to such a range as between 10 and 15°C, so that the air-conditioning heat exchanger 100 enhances the operating temperature of the Peltier devices 20. Since the Peltier device 20 is efficient when operating at an averagely high operating temperature, the efficiency of the air conditioning of the air-conditioning heat exchanger 100 of the above-described embodiment is improved.

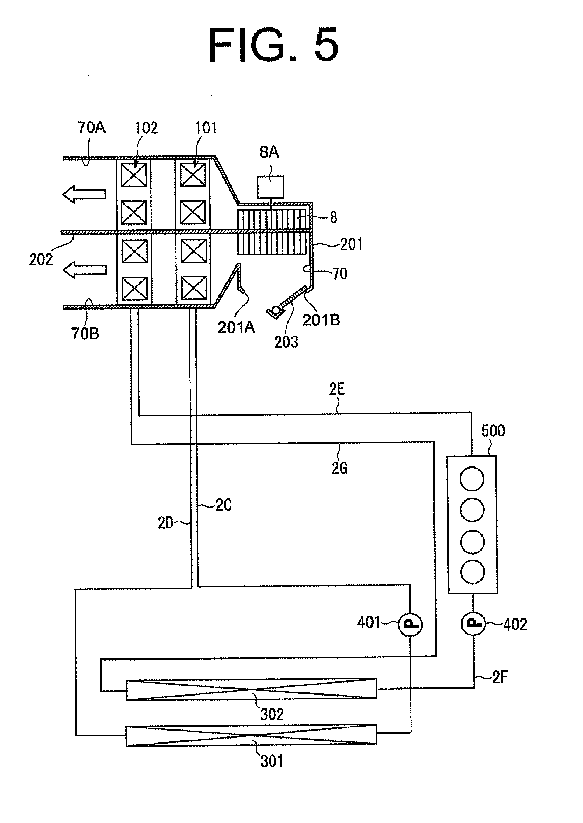

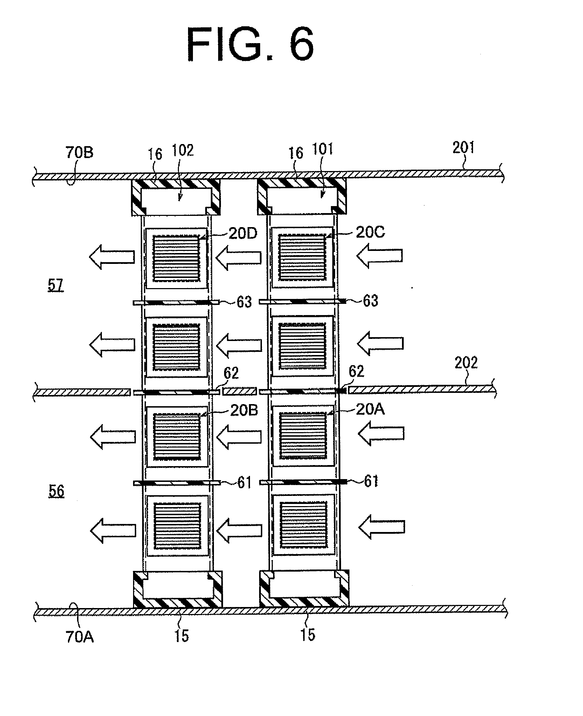

Referring to Figs. 5 and 6 showing the vehicle air conditioner of the second embodiment, the air conditioner has a duct 201, first and second air-conditioning heat exchangers 101 and 102 in the duct 201.

As shown in Fig. 5, the duct 201 has therein an air-conditioning passage 70. The duct 201 has at the upstream end thereof an opening 201A and an opening 201 B as viewed in the air flowing direction. The opening 201A is used for allowing the inside air into the air-conditioning passage 70. The opening 201 B is used for allowing the outside air into the air-conditioning passage 70. The openings 201A and 201 B are opened and closed selectively by a flapper 203. A sirocco fan 8 is located in the air-conditioning passage 70 at a position between the openings 201A, 201B and the air-conditioning heat exchangers 101, 102. The sirocco fan 8 is driven to rotate by a motor 8A.

A partition wall 202 is provided in the duct 201 and extends in an air flowing direction in which air flows through the duct 201. The partition wall 202 divides the air-conditioning passage 70 into two divided passages having a heating passage 70A and a dehumidification passage 70B. The partition wall 202 extends through the sirocco fan 8 so that part of the sirocco fan 8 is located in the heating passage 70A while the remaining part is located in the dehumidification passage 70B for supplying inside air or outside air to the heating passage 70A and the dehumidification passage 70B. As shown in Fig. 6, the duct 201 has therein the heating guide passage 56 and the dehumidification guide passage 57 at positions that are downstream of the first and second air-conditioning heat exchangers 101, 102 as in the case of the first embodiment. The heating guide passage 56 guides air to the heating outlet in the vehicle interior and the dehumidification guide passage 57 guides air to the dehumidification outlet.

The first and second air-conditioning heat exchangers 101, 102 are substantially the same as the counterparts of the first embodiment. The partition wall 202 extends through the first and second air-conditioning heat exchangers 101, 102 so that part of the first and second air-conditioning heat exchangers 101, 102 is located in the heating passage 70A while the remaining part is located in the dehumidification passage 70B. Thus, as shown in Fig. 6, the heating passage 70A has therein a first heating Peltier device 20A and a second heating Peltier device 20B that is located downstream of the first heating Peltier device 20A with respect to the air flowing direction. The dehumidification passage 70B has therein a first dehumidification Peltier device 20C and a second dehumidification Peltier device 20D that is located downstream of the first dehumidification Peltier device 20C with respect to the air flowing direction.

Referring to Figs. 5 and 6, the second head 16 of the first air-conditioning heat exchanger 101 is connected to a first radiator 301 by a pipe 2C in which a first pump 401 is mounted. The first radiator 301 is connected to the first head 15 of the first air-conditioning heat exchanger 101 by a pipe 2D. The second head 16 of the second air-conditioning heat exchanger 102 is connected by a pipe 2E to an engine 500, which is in turn connected to a second radiator 302 by a pipe 2F in which a second pump 402 is mounted. The second radiator 302 is connected to the first head 15 of the second air-conditioning heat exchanger 102 by a pipe 2G.

The first heating Peltier device 20A, the second heating Peltier device 20B, the first dehumidification Peltier device 20C and the second dehumidification Peltier device 20D are controlled separately by the drive circuit 6 as in the case of the first embodiment.

The operation of the first heating Peltier device 20A is controlled so that the first heat transfer member 31 absorbs heat. Thus, the first heating Peltier device 20A is operable to dehumidify the air flowing through the heating passage 70A. The operation of the second heating Peltier device 20B is controlled so that the first heat transfer member 31 radiates heat. Thus, the second heating Peltier device 20B is operable to heat the air flowing through the heating passage 70A. The air flowing through the heating passage 70A and blown toward the passenger in the vehicle interior heats the vehicle interior while preventing the windshield of the vehicle from being fogged.

Application of electric current to the first dehumidification Peltier device 20C is stopped for saving power. The operation of the second dehumidification Peltier device 20D is controlled so that the first heat transfer member 31 absorbs heat. Thus, the second dehumidification Peltier device 20D is operable to dehumidify the air flowing through the dehumidification passage 70B. The air flowing through the dehumidification passage 70B is blown against the windshield of the vehicle. When the windshield tends to be fogged easily, the operation of the first dehumidification Peltier device 20C is also controlled so that the first heat transfer member 31 absorbs heat. Thus, the windshield of the vehicle is prevented positively from being fogged.

The vehicle air conditioner of the second embodiment offers substantially the same effects as that of the first embodiment. In particular, the vehicle air conditioner of the second embodiment is operable to heat the vehicle interior efficiently in view of the fog of the windshield.

The present invention has been described in the context of the first and second embodiments, but it is not limited to the embodiments. It is obvious to those skilled in the art that the invention may be practiced in various manners as exemplified below.

In the first embodiment, by changing the water flowing direction from D2 to D1, the Peltier devices 20 in the first and second air-conditioning passages (heating passages) 51 and 52 are located upstream of the Peltier devices 20 in the third and fourth air-conditioning passages (dehumidification passages) 53 and 54 with respect to the water flowing direction D1. By changing the water flowing direction from D1 to D2, the Peltier devices 20 in the first and second air-conditioning passages (heating passages) 51 and 52 are located downstream of the Peltier devices 20 in the third and fourth air-conditioning passages (dehumidification passages) 53 and 54 with respect to the water flowing direction D2. However, the present invention is not limited to such structure of the first embodiment.

Switching the directions of electric current to be applied by the drive circuit 6 to the four pairs of electric supply lines 6A and 6B, the function of the Peltier devices 20 in the first and second air-conditioning passages (heating passages) 51 and 52 and of the Peltier devices 20 in the third and fourth air-conditioning passages (dehumidification passages) 53 and 54 may be changed. In this case, the same effects of the first embodiment are achieved without changing the water flowing direction.

The timing at which the water flowing direction is switched between D1 and D2 may be determined in such a way that when dehumidification load is high, the water flowing direction D2 is switched to D1 for increasing the dehumidification capacity of the Peltier devices 20 in the third and fourth air-conditioning passages 53 and 54 and when dehumidification load is low, the water flowing direction D1 is switched to D2 for increasing the operating efficiency of the Peltier devices 20.

Although the water flowing direction is switchable between D1 and D2, the water flowing direction may be fixed to either one of D1 and D2. In this case, the direction D1 is advantageous over D2 in that the dehumidification capacity of the Peltier devices 20 in the third and fourth air-conditioning passages (dehumidification passages) 53 and 54 is enhanced and, therefore, any humidity change in the vehicle interior can be met positively and rapidly.

Although in the first and second embodiments the number of Peltier devices 20 of the first and second air-conditioning passages (heating passages) 51 and 52 is six and the number of Peltier devices 20 of the third and fourth air-conditioning passages (dehumidification passages) 53 and 54 is six, the first and second embodiments may be modified by changing the number of the Peltier devices 20. When the dehumidification load is high, it may be so arranged that the number of Peltier devices 20 of the first and second air-conditioning passages (heating passages) 51 and 52 is reduced to, for example, three and the number of Peltier devices 20 of the third and fourth air-conditioning passages (dehumidification passages) 53 and 54 is increased to nine. In this case, however, the heating guide passage 56 and the dehumidification guide passage 57 need to be modified, accordingly, so that no mixing air to be cooled and air to be heated occurs.

In the above embodiments, the first heat transfer member and the second heat transfer member are provided for each Peltier device. According to the present invention, however, the first heat transfer member and the second heat transfer member may be provided so as to cover a plurality of Peltier devices.

The present invention is usable not only for the vehicle air conditioner but also for an air conditioner of a building.

The air-conditioning heat exchanger includes a plurality of Peltier devices, a plurality of first heat transfer members, a plurality of second heat transfer members, an air-conditioning passage and a heat exchange medium passage. The air-conditioning passage has therein the Peltier devices and the first heat transfer members. The air-conditioning passage allows air to be air-conditioned to flow therethrough. The air-conditioning passage has a plurality of divided passages at least at positions that are downstream of upstream ends of the first heat transfer members with respect to an air flowing direction in which the air flows through the air-conditioning passage. The Peltier device in each divided passage is controlled separately from the Peltier device in other divided passage. The heat exchange medium passage has therein the second heat transfer members and allows fluid to flow through the heat exchange medium passage.

## Claims

1. An air-conditioning heat exchanger (100, 101, 102) comprising:
a plurality of Peltier devices (20) each having a first surface (21A) and a second surface (22A) one of which serves as a heat absorbing surface and the other of which serves as a heat radiating surface;
a plurality of first heat transfer members (31) thermally connected to the first surfaces (21A) of the Peltier devices (20), respectively;
a plurality of second heat transfer members (32) thermally connected to the second surfaces (22A) of the Peltier devices (20), respectively;
an air-conditioning passage (50, 70) having therein the Peltier devices (20) and the first heat transfer members (31), the air-conditioning passage (50, 70) allowing air to be air-conditioned to flow therethrough; and
a heat exchange medium passage (11A, 12A, 13A) having therein the second heat transfer members (32) and allowing fluid to flow through the heat exchange medium passage (11A, 12A, 13A),
**characterized in that**
the air-conditioning passage (50, 70) has a plurality of divided passages (51, 52, 53, 54, 70A, 70B) at least at positions that are downstream of upstream ends of the first heat transfer members (31) with respect to an air flowing direction in which the air flows through the air-conditioning passage (50, 70), wherein the Peltier device (20) in each divided passage (51, 52, 53, 54, 70A, 70B) is controlled separately from the Peltier device (20) in other divided passage (51, 52, 53, 54, 70A, 70B).

2. The air-conditioning heat exchanger (101, 102) according to claim 1, **characterized in that** each divided passage (70A, 70B) has therein a first Peltier device (20A, 20C) and a second Peltier device (20B, 20D) that is located downstream of the first Peltier device (20A, 20C) with respect to the air flowing direction, wherein the first Peltier device (20A, 20C) and the second Peltier device (20B, 20D) are controlled so as to differ in directions of electric currents (I1, I2) supplied to the first and second Peltier devices (20A, 20B, 20C, 20D).

3. The air-conditioning heat exchanger (100, 101, 102) according to claim 1 or 2, **characterized in that** the divided passages (51, 52, 53, 54, 70A, 70B) are provided by a heating passage (51, 52, 70A) and a dehumidification passage (53, 54, 70B), wherein the Peltier device (20) in the heating passage (51, 52, 70A) and the Peltier device (20) in the dehumidification passage (53, 54, 70B) are controlled so as to differ in directions of electric currents (I1, I2) supplied to the Peltier devices (20).

4. The air-conditioning heat exchanger (100, 101, 102) according to claim 3, **characterized in that** the Peltier device (20) in the heating passage (51, 52, 70A) is located upstream of the Peltier device (20) in the dehumidification passage (53, 54, 70B) with respect to a fluid flowing direction (D1) in which the fluid flows through the heat exchange medium passage (11A, 12A, 13A).

5. The air-conditioning heat exchanger (100, 101, 102) according to claim 3, **characterized in that** the Peltier device (20) in the heating passage (51, 52, 70A) is located downstream of the Peltier device (20) in the dehumidification passage (53, 54, 70B) with respect to a fluid flowing direction (D2) in which the fluid flows through the heat exchange medium passage (11A, 12A, 13A).

6. An air conditioner comprising:
the air-conditioning heat exchanger (100, 101, 102) according to any one of claims 3 through 5; and
a duct (200, 201) having therein the air-conditioning heat exchanger (100, 101, 102),
**characterized in that**
the duct (200, 201) has a heating guide passage (56) and a dehumidification guide passage (57), wherein the heating guide passage (56) is operable to guide the air heated by the first heat transfer member (31) in the heating passage (51, 52, 70A) toward a heating outlet, wherein the dehumidification guide passage (57) is operable to guide the air cooled by the first heat transfer member (31) in the dehumidification passage (53, 54, 70B) toward a dehumidification outlet.
